# EUROPÄISCHE PATENTSCHRIFT

(11) **EP 0 504 639 B1**
(45) Veröffentlichungstag und Bekanntmachung des Hinweises auf die Patenterteilung: **27.09.1995**
(21) Anmeldenummer: 92103417.9
(22) Anmeldetag: 28.02.1992
(51) Int. Cl.: A01D 45/02

(54) **Maiserntegerät**
Maize harvesting implement
Outil pour récolter du mais

(30) Priorität: 20.03.1991 DE 4109064
(43) Veröffentlichungstag der Anmeldung: 23.09.1992
(73) Patentinhaber: CLAAS SAULGAU GMBH, D-88340 Saulgau (DE)
(72) Erfinder: Arnold, Rudolf, W-7968 Saulgau (DE)

(56) Entgegenhaltungen:
- AT-B- 303 433
- DE-A- 2 000 478
- DE-A- 3 623 380
- DE-A- 4 002 344
- US-A- 4 211 059

## Beschreibung

Die Erfindung bezieht sich auf Maiserntegeräte nach dem Oberbegriff des Anspruches 1.

Geräte dieser Gattung haben den Vorteil, daß die Mähwerkzeuge - im Gegensatz zu Geräten mit Messer und Gegenschneide - praktisch alle Maisstengel mähen können, die innerhalb der Wirkbreite der Mähwerkzeuge auf diese auftreffen. Sie haben aber den Nachteil, daß die Mähwerkzeuge wegen des freien Schnittes mit hoher Umfangsgeschwindigkeit umlaufen müssen. Weiterhin sind meistens je Mähwerkzeug mehrere Abteilerspitzen funktionsnotwendig und darüber hinaus noch Klemmvorrichtungen, die die abgeschnittenen Maisstengel zu einer Einzugsstelle weiterbefördern. Maschinen nach der DE-OS 33 40 820 oder den in der DE-OS 40 02 344 angegebenen DE-OS 33 08 077 und 37 12 507 mögen als Beispiele dafür dienen.

Mit der Erfindung soll ein Maiserntegerät geschaffen werden, das die oben angeführten Nachteile vermeidet, einfacher im Aufbau und auch unempfindlicher gegen Beschädigungen ist.

Dies wird erfindungsgemäß dadurch erreicht, daß die Schneidkanten ihren Radius, entgegen der Drehrichtung gesehen, etwa zykloidförmig vergrößern. Dieses Merkmal bewirkt, daß die Maisstengel in einem ziehenden Schnitt und dadurch mit einer kleiner möglichen Umfangsgeschwindigkeit abgeschnitten werden, daß die Maisstengel nur einem geringen Stoß durch die Schneidkanten ausgesetzt werden und daß wegen der gleichen Winkelgeschwindigkeit von Mähwerkzeugen und Fördertrommeln keine zerrende Wirkung auf die Maisstengel auftritt. Die zykloidförmige Ausgestaltung der Schneidkanten hat weiterhin zur Wirkung, daß die Mähwerkzeuge nicht nur mit der Vorwärtsgeschwindigkeit des Maiserntegerätes in den zu schneidenden Maisstengel eindringen, sondern mit einer durch den Anstieg der zykloidförmigen Schneidkanten bedingten zusätzlichen Geschwindigkeit. Das Durchschneiden des Maisstengels erfolgt deshalb in einer kürzeren Zeit, als bei bekannten Maschinen, mit der Wirkung, daß nur teilweise durchschnittene Maisstengel bei den üblichen Fahrgeschwindigkeiten vermieden werden können.

In den Unteransprüchen 2 und 3 werden vorteilhafte Ausgestaltungen für die Mähwerkzeuge offenbart.

Bei Maiserntegeräten mit frei schneidenden Mähwerkzeugen ist es besonders schwierig, die abgeschnittenen Maisstengel geordnet den nachfolgenden Zuführorganen zu übergeben. Um dies zu erreichen, werden nach der Erfindung drei verschiedene Einrichtungen vorgesehen, die in ihrem Zusammenwirken den gewünschten Erfolg bewirken. Die Maßnahme nach Anspruch 4 dient dazu, den Stengelfuß so lange festzuhalten, bis Mitnehmerflächen nach Anspruch 5 und 6 in Zusammenwirken mit einem Niederhalter nach Anspruch 7 den Stengelfuß aus der Ausstülpung der Mähwerkzeuge herausheben und ihn in Richtung auf die nachfolgenden Zuführorgane ausrichten. Dies wird dadurch bewirkt, daß die Niederhalter nach Anspruch 7 den Maisstengel im oberen Bereich niederdrücken, während die umlaufenden Mitnehmerflächen nach den Ansprüchen 5 und 6 den Maisstengel in Richtung auf die nachfolgenden Zuführorgane drücken.

Die Ansprüche 8 - 10 geben Ausgestaltungsregeln für den Fall, daß Maiserntegeräte größerer Arbeitsbreite gebaut werden sollen.

Die Erfindung wird anhand von 5 Abbildungen beispielsweise erläutert.
- Figur 1: zeigt ein Maiserntegerät mit 6 Mähwerkzeugen in einer Ansicht von oben.
- Figur 2: zeigt den gleichen Gegenstand von der Seite.
- Figur 3: zeigt ein Maiserntegerät mit 4 Mähwerkzeugen von oben.
- Figur 4: zeigt ein Messer eines Mähwerkzeuges von oben.
- Figur 5: zeigt den gleichen Gegenstand von der Seite.

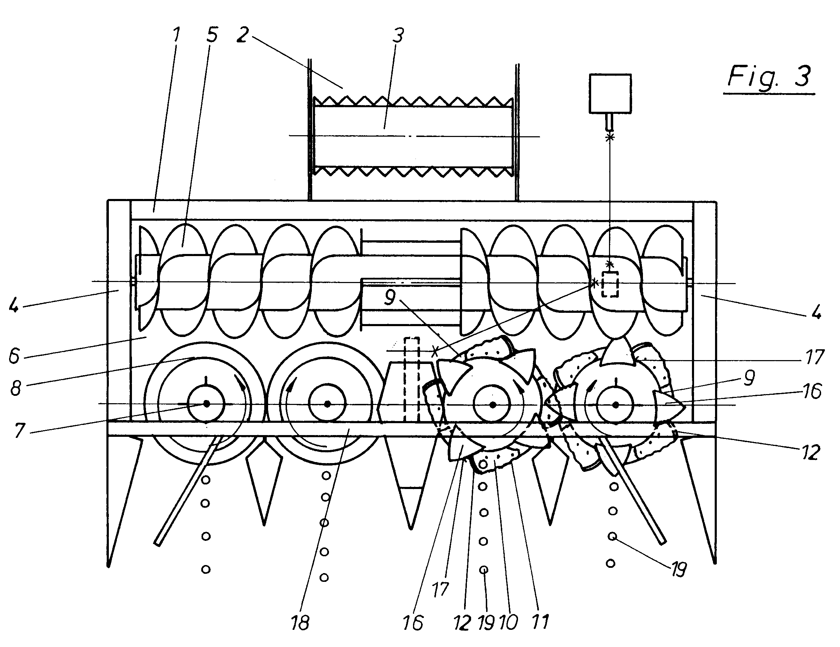

Das tragende Gerüst eines Maiserntegerätes wird von einer in Fahrtrichtung vorne offenen Wanne (1) gebildet. An der Rückseite der Wanne (1) schließt sich ein Förderschacht (2) mit Förderwalzen (3) an, die der Weiterführung des Erntegutes in eine nicht dargestellte Erntemaschine dienen. In den Seitenwänden (4) der Wanne (1) ist eine Querförderschnecke (5) drehbar gelagert. Auf dem Wannenboden (6) sind auf etwa senkrechten Wellen (7) umlaufende Mähwerkzeuge (8) befestigt, die im wesentlichen aus einem scheibenförmigen Messerträger (9) und daran befestigten Messern (10) bestehen. Auf einem Messerträger (9) sind vorzugsweise 4 Messer (10) angeordnet (Figur 3). Die Messer (10) (Figuren 4 und 5) sind als dünne Stahlscheiben ausgebildet. Ihre Schneidkanten (11) haben einen wellenförmigen Schliff. An den in Drehrichtung rückwärtigen Enden der Schneidkanten (11) sind die Messer (10) nach oben gebogen und bilden dort eine Aufstülpung (12). Im montierten Zustand haben die Schneidkanten (11) etwa die Gestalt einer Zykloide, die vom Umriß der Messerträger (9) aus ansteigt.

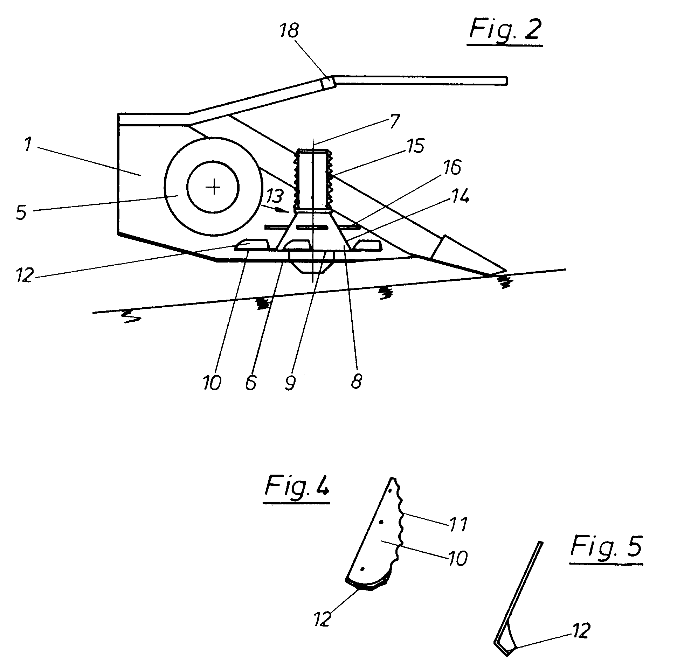

Ebenfalls mit den Wellen (7) sind über den Messerträgern (9) Fördertrommeln (13) fest verbunden. Sie können, wie in Figur 2 dargestellt, aus einem kegelstumpfförmigen Grundkörper (14) und einer darüberliegenden zylinderförmigen Förderwalze (15) bestehen, oder aber auch nur aus einem kegelförmigen Grundkörper. Mit dem kegelförmigen Grundkörper (14) sind waagrechte Mitnehmerflächen (16) fest verbunden. Ihre in Drehrichtung vorlaufende Kante (17) ist ebenfalls etwa zykloidförmig ausgebildet, aber steiler als die Schneidkanten (11). Von oben gesehen überkreuzen sich die Kanten (17) und die Aufstülpungen (12) der Messer (10). Auch stimmt die Anzahl der Mitnehmerflächen (16) mit derjenigen der Messer (10) überein. Die äußeren Fördertrommeln (13) eines Maiserntegerätes sind vorzugsweise wie in Figur 2 gezeigt ausgebildet, während die inneren Fördertrommeln (13) auch lediglich aus kegelförmigen Grundkörpern (14) mit Mitnehmerflächen (16) aufgebaut sein können.

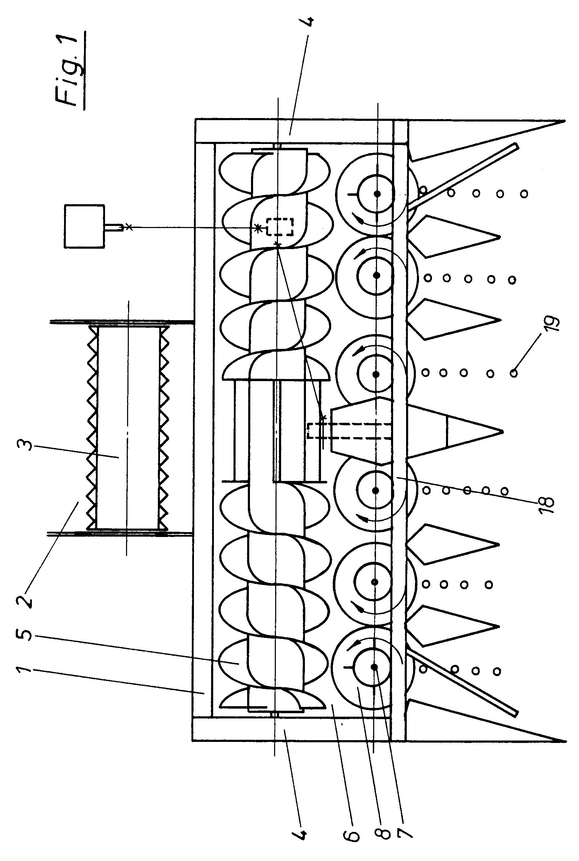

Die Wellen (7) für die Mähwerkzeuge (8) und die Fördertrommeln (13) werden im angezeigten Drehsinn angetrieben (Figuren 1 und 3). Die Wellen (7) haben solche Abstände, daß sich die Umkreise der Messer (10) bei gegensinnig angetriebenen Mähwerkzeugen (8) überdecken, während sie sich bei gleichsinnig angetriebenen Mähwerkzeugen (8) nicht überdecken.

Quer zur Fahrtrichtung verläuft oberhalb der Mähwerkzeuge (8) und der Fördertrommeln (13) ein stangenförmiger Niederhalter (18).

Wenn ein Maisstengel (19) (Figur 3) von einem Messer (10) abgeschnitten wurde, wird er zunächst von der Aufstülpung (12) in Drehrichtung mitgenommen und stützt sich dabei an der Kante (17) der Mitnehmerflächen (16) ab. Wenn danach der obere Teil des Maisstengels gegen die Vorderseite des Niederhalters (18) stößt, wird dort die Bewegung in Drehrichtung aufgehalten. Wenn sich Messer (10) und Mitnehmerflächen (16) weiterdrehen, wird der Fuß des Maisstengels (19) aus der Aufstülpung (12) herausgehoben und durch zwei benachbarte Fördertrommeln (13) in Richtung auf die Querförderschnecke (5) bewegt.

## Patentansprüche

1. Maiserntegerät mit um etwa senkrechte Achsen (7) umlaufenden, frei schneidenden Mähwerkzeugen (8) und dazu gleichachsig und mit gleicher Winkelgeschwindigkeit umlaufenden Fördertrommeln (13) oder dergleichen, wobei die Mähwerkzeuge (8) mehrere an ihrem Umfang angeordnete Schneidkanten (11) aufweisen, dadurch gekennzeichnet daß der Radius der Schneidkanten (11), entgegen der Drehrichtung gesehen, etwa zykloidförmig vergrößert ist.

2. Maiserntegerät nach Anspruch 1, dadurch gekennzeichnet, daß die Umfangsgeschwindigkeit der umlaufenden Mähwerkzeuge (8) in den Grenzen von 8 m/s - 20 m/s liegt.

3. Maiserntegerät nach den Ansprüchen 1 und 2, dadurch gekennzeichnet, daß die Schneidkanten (11) der Mähwerkzeuge (8) einen Wellenschliff haben.

4. Maiserntegerät nach den Ansprüchen 1 - 3, dadurch gekennzeichnet, daß die Mähwerkzeuge (8) an den in Drehrichtung rückwärtigen Enden der Schneidkanten (11) derart aufgestülpt sind, daß die abgeschnittenen Maisstengel (19) daran gehindert werden, von den Mähwerkzeugen (8) in radialer Richtung abzufließen.

5. Maiserntegerät nach den Ansprüchen 1 - 4, dadurch gekennzeichnet, daß die Fördertrommeln (13) kegelförmig oder Zylinderförmig oder beides ausgestaltet sind und daß sie an ihrem Umfang eine mit der Anzahl der Schneidkanten (11) übereinstimmende Anzahl von etwa waagrechten Mitnehmerflächen (16) haben, deren Förderkanten (17) ihren Radius ebenfalls, entgegen der Drehrichtung gesehen, etwa zykloidförmig vergrößern und die im senkrechten Abstand oberhalb der zykloidförmigen Schneidkanten (11) angeordnet sind.

6. Maiserntegerät nach Anspruch 5, dadurch gekennzeichnet, daß die zykloidförmige Kanten (17) der Mitnehmerflächen (16) entgegen der Drehrichtung gesehen etwas hinter den zykloidförmigen Schneidkanten (11) liegen.

7. Maiserntegerät nach den Ansprüchen 1 - 6, dadurch gekennzeichnet, daß über den Fördertrommeln (13) quer zur Fahrtrichtung maschinenfeste Niederhalter (18) angeordnet sind.

8. Maiserntegerät nach den Ansprüchen 1 - 7, dadurch gekennzeichnet, daß die Mähwerkzeuge (8) und die Fördertrommeln (13) paarweise an dem Maiserntegerät quer zur Fahrtrichtung nebeneinander angeordnet sind, und daß die ein Paar bildenden Mähwerkzeuge (8) und Fördertrommeln (13) jeweils gegenläufig angetrieben werden.

9. Maiserntegerät nach Anspruch 8, dadurch gekennzeichnet, daß bei Maiserntegeräten mit 3 Paaren von Mähwerkzeugen (8) und Fördertrommeln (13) das mittlere Paar im umgekehrten Drehsinn zu den äußeren Paaren angetrieben wird.

10. Maiserntegerät nach den Ansprüchen 8 und 9, dadurch gekennzeichnet, daß der Achsabstand zwischen zwei benachbarten Mähwerkzeugen (8) und Fördertrommeln (13), die im gleichen Drehsinn umlaufen, größer ist, als derjenige von benachbarten Mähwerkzeugen (8) und Fördertrommeln (13), die zueinander gegenläufig umlaufen.

## Claims

1. A corn harvester having freely cutting mowing tools (8) which rotate about approximately perpendicular axes (7) and conveyor drums (13) or the like which rotate in coaxial relationship therewith and at the same angular speed, wherein the mowing tools (8) have a plurality of cutting edges (11) arranged at their periphery, characterised in that the radius of the cutting edges (11), as viewed in opposition to the direction of rotation, is increased approximately in a cycloid shape.

2. A corn harvester according to claim 1 characterised in that the peripheral speed of the rotating mowing tools (8) lies in the limits of 8 m/s - 20 m/s.

3. A corn harvester according to claims 1 and 2 characterised in that the cutting edges (11) of the mowing tools (8) are ground in a wavy configuration.

4. A corn harvester according to claims 1 to 3 characterised in that at the ends of the cutting edges (11) which are rearward in the direction of rotation the mowing tools (8) are turned up in such a way that the corn stalks (19) which have been cut off are prevented from flowing off the mowing tools (8) in the radial direction.

5. A corn harvester according to claims 1 to 4 characterised in that the conveyor drums (13) are of a conical or cylindrical configuration or both and that at their periphery they have a number of approximately horizontal entrainment surfaces (16), which number is the same as the number of cutting edges (11), the conveyor edges (17) of the entrainment surfaces (16), as viewed in opposition to the direction of rotation, also having their radius increase approximately in a cycloid configuration, the entrainment surfaces being arranged at a vertical spacing above the cycloidal cutting edges (11).

6. A corn harvester according to claim 5 characterised in that the cycloidal edges (17) of the entrainment surfaces (16), as viewed in opposition to the direction of rotation, lie somewhat behind the cycloidal cutting edges (11).

7. A corn harvester according to claims 1 to 6 characterised in that hold-down means (18) which are fixed with respect to the machine are arranged above the conveyor drums (13), transversely to the direction of travel.

8. A corn harvester according to claims 1 to 7 characterised in that the mowing tools (8) and the conveyor drums (13) are arranged in pairs on the corn harvester in side-by-side relationship transversely to the direction of travel and that the conveyor drums (13) and mowing tools (8) forming a pair are respectively driven in opposite relationship.

9. A corn harvester according to claim 8 characterised in that, in corn harvesters with three pairs of mowing tools (8) and conveyor drums (13), the addle pair is driven in the opposite direction of rotation to the outer pairs.

10. A corn harvester according to claims 8 and 9 characterised in that the distance between centres of two adjacent mowing tools (8) and conveyor drums (13) which rotate in the same direction of rotation is greater than that of adjacent mowing tools (8) and conveyor drums (13) which rotate in opposite relationship to each other.

## Revendications

1. Ensemble de récolte de maïs comprenant des outils de récolte (8) effectuant une coupe libre et tournant autour d'axes verticaux (7) et en outre des tambours de transfert (13) ou analogues tournant autour des mêmes axes et selon la même vitesse angulaire, les outils de récolte (8) comprenant plusieurs arêtes de coupe (11) disposées sur leur périphérie, caractérisé en ce que le rayon des arêtes de coupe (11) augmente sensiblement sous une forme cycloïdale, vue dans le sens inverse de celui de la rotation.

2. Ensemble de récolte de maïs selon la revendication 1, caractérisé en ce que la vitesse périphérique des outils de récolte rotatifs (8) est comprise entre 8 m/s et 20 m/s.

3. Ensemble de récolte de maïs selon les revendications 1 et 2, caractérisé en ce que les arêtes de coupe (11) des outils de récolte (8) sont de forme ondulée.

4. Ensemble de récolte de maïs selon les revendications 1 à 3, caractérisé en ce que les outils de récolte (8) sont relevés aux extrémités arrière des arêtes de coupe (11) en direction de la rotation de manière que les tiges de maïs coupées (19) soient empêchées par eux de s'échapper en direction radiale des outils de récolte (8).

5. Ensemble de récolte de maïs selon les revendications 1 à 4, caractérisé en ce que les tambours de transfert (13) sont de constitution conique ou cylindrique, ou les deux, et en ce qu'ils comprennent sur leur périphérie des surfaces d'entraînement sensiblement horizontales dont le nombre correspond au nombre des arêtes de coupe (11), surfaces dont le rayon de leurs bords d'entraînement (17), vus dans le sens inverse de celui de la rotation, augmente également sensiblement sous une forme cycloïdale, et en ce qu'elles sont disposées selon un écartement vertical au-dessus des arêtes de coupe de forme cycloïdale (11).

6. Ensemble de récolte de maïs selon la revendication 5, caractérisé en ce que les bords de forme cycloïdale (17) des surfaces d'entraînement (16), vus dans le sens contraire à celui de la rotation, sont disposés un peu à l'arrière des arêtes de coupe (11) de forme cycloïdale.

7. Ensemble de récolte de maïs selon les revendications 1 à 6, caractérisé en ce que des éléments de retenue (18) fixés à la machine sont disposés au-dessus des tambours de transfert (13) transversalement à la direction de la marche.

8. Ensemble de récolte de maïs selon les revendications 1 à 7, caractérisé en ce que les outils de récolte (8) et les tambours de transfert (13) sont disposés les uns contre les autres par paires et transversalement à la direction de la marche, et en ce que les outils de récolte (8) et les tambours de transfert (13) qui forment une paire sont respectivement entraînés en sens contraires.

9. Ensemble de récolte de maïs selon la revendication 8, caractérisé en ce que dans le cas d'ensembles de récolte de maïs à trois paires d'outils de récolte (8) et de tambours de transfert (13), la paire centrale est entraînée en sens contraire à celui des paires extérieures.

10. Ensemble de récolte de maïs selon les revendications 8 et 9, caractérisé en ce que la distance entre axes entre deux outils de récolte (8) et tambours de transfert (13) voisins qui tournent dans le même sens est plus importante que celle séparant des outils de récolte (8) et des tambours de transfert (13) voisins tournant respectivement en sens contraire.
